# EUROPEAN PATENT SPECIFICATION

(11) **EP 0 278 791 B1**
(45) Date of publication and mention of the grant of the patent: **14.04.1993**
(21) Application number: 88301249.4
(22) Date of filing: 15.02.1988
(51) Int. Cl.: G01N 29/04

(54) **Ultrasonic flaw testing equipment for detecting defects in cast metal billets**
Ultraschallprüfvorrichtung zur Feststellung von Fehlstellen in gegossenen Metallrundbarren
Equipement de contrôle ultrasonore pour détecter des défauts dans des billettes métalliques coulées

(30) Priority: 13.02.1987 NO 870568
(43) Date of publication of application: 17.08.1988
(73) Proprietor: NORSK HYDRO A/S, 0257 Oslo 2 (NO)
(72) Inventor: Rendalsvik, Arnfinn, N-6600 Sunndalsora (NO)
(74) Representative: Allen, Oliver John Richard

(56) References cited:
- DE-A- 1 773 531
- FR-A- 1 567 552
- FR-A- 1 568 857
- GB-A- 1 572 107
- US-A- 3 602 036

## Description

The present invention relates to ultrasonic flaw testing equipment, for detecting defects in cast metal billets.

Metal billets are in this connection defined as solid bodies having round or essentially round cross sections.

The invention has been developed to be employed for testing aluminium billets, but may also be used for testing billets made of other metals. Such metal billets are cast in different types of casting equipment. During the casting process, different types of defects may occur, such as cracks, cavities, as well as inclusions of solid impurities. Obviously, it is necessary to detect such defects before the billets enter the following production step, e.g. extrusion.

Ultrasonic equipment is the most common tool for locating cast defects in billets. Such equipment consists of an ultrasonic probe and a screen unit. The probe is held against the surface of the billet, and on the screen a diagram occurs in the form of a light emitting curve on which defects are revealed as peaks on a generally smooth line. When defects are revealed on the screen, the operator has to make a mark on the billet at the position where the defect is found.

This procedure needs a skilled person who understands how the billet may be adequately covered with observation or test points. The test work is repetitious and boring and obviously many defects are not found. Therefore, many efforts have been made to rationalise the flaw testing procedure.

One of the difficulties which arise when using ultrasonic test equipment lies in the fact that the probe needs to have sufficient contact with the body being tested. This contact is achieved by adding some kind of fluid, water or fatty substance, between the probe and the billet. By submerging the billet in water, there will always be good contact between the probe and the billet, and it is thus possible to arrange a fully automatic testing of the billet. This testing method is however inconvenient. The billet has to be lifted from a transportation device and submerged into the water, and thereafter, dripping wet, be returned to the transportation device. If while the billet is submerged in the water, the probe is guided manually along the surface of the billet, detected defects can hardly be marked on the billet due to the surrounding water.

GB Patent Publication No. 1.376.538 discloses an ultrasonic flaw testing equipment similar to the equipment according to the present application, but which is arranged to rotate around the body being tested. A probe is mounted on a coupling shoe. This coupling shoe is however very complicated and expensive to produce, and consists of two coaxial pipes which protrude radially from the axis of rotation for the ultrasonic device and which at their inner ends are fixedly mounted to a bore in a guide shoe, while the probe is mounted to the opening of the outer ends of the pipes. A relatively large, open space is thereby created between the probe and the test object. The open space is connected to water supply pipes and is filled with water during the ultrasonic flaw testing operation.

Even if the coupling shoe is provided with canals or bores to provide the necessary water supply, bubbles and air pockets will easily be created in the open space. Such air bubbles and air pockets especially occur in connection with the changing from one test object to another, and cause disturbances and detection errors.

Another disadvantage with the above-mentioned, known coupling shoe is that it can only be used for testing objects having equal dimensions, due to water leakage. Thus, when changing from one dimension to another, a coupling shoe corresponding to the size of the newly changed test object have to be used.

Further, the ultrasonic flaw testing equipment according to the above GB Patent is not provided with marking equipment for the marking of defects on the test objects.

It is an object of the present invention to provide an ultrasonic flaw test equipment which is not encumbered with the above disadvantages.

French Patent No 1568857 describes on ultrasonic flaw testing equipment comprising two ultrasonic probes with means for supplying a fluid between the probes and the object to be tested. Each probe comprises a disc of piezo-electric material carried in a coupling shoe of absorbent material.

German Patent Application No. 1773531 also describes an ultrasonic flaw testing equipment with two ultrasonic probes. The equipment includes a marking unit located at a distance from the probes. The probes and the marking unit are connected to a shift register which serves to ensure defects detected by the probes on test objects are correctly marked.

Ultrasonic flaw testing equipment in accordance with the invention for continuous, automatic flaw testing of cast metal billets has one or more ultrasonic probes, a coupling shoe for the or each probe, the coupling shoe(s) being exchangeable and means for supplying a fluid, preferably water, between the probes and a metal billet characterised in that the or each ultrasonic probe is disposed in a blind bore or recess in the associated coupling shoe from which it is separable and in that the lower part of the probe is submerged in a liquid.

The equipment has means for delivering the fluid at the surface of the shoe which is preferably designed to engage the billet.

Test errors caused by air pockets and air bubbles are avoided due to the fact that the probe does not have direct contact with the fluid which is used as lubrication and a "contact aid" between the test object and the coupling shoe.

The coupling or guide shoe may be made in one piece and of a material which is easy to work.

The contact surface for the coupling shoe against the test object is concave, and it has been proved by testing that the coupling shoe can be used on billets (test objects) having different diameters.

A further improvement is achieved by arranging for impulses from the ultrasonic flaw test equipment to activate a marking device which automatically marks the surface of the test object on the place where a defect is detected.

The invention will now be further described by way of example with reference to the accompanying drawings in which:
Figures 1 is a cross sectional view of a test station, normal to the direction of transportation,
Figure 2 shows a coupling shoe in which the ultrasonic probe is mounted,

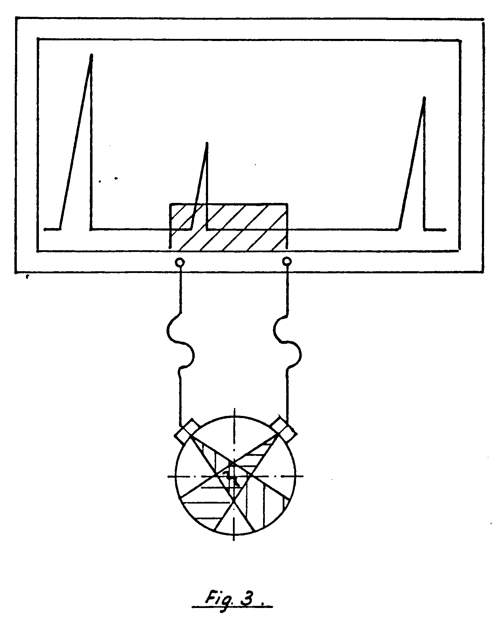

Figure 3 shows a diagram revealing a defect in a test object, and
Figure 4 shows an enlarged cross section at section line A-A in Figure 2.

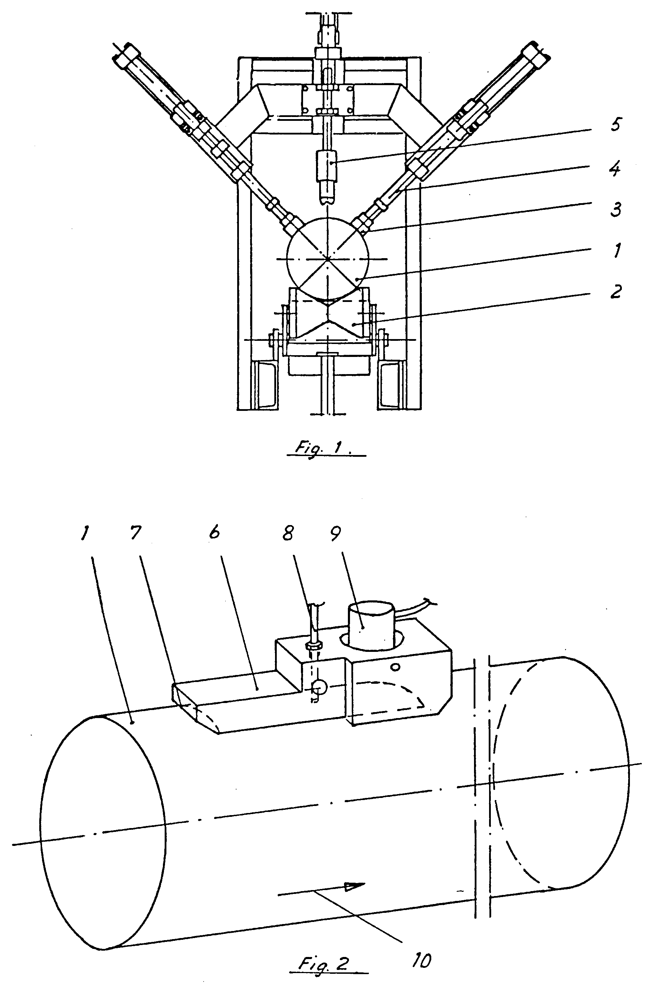

Referring to Figure 1 the billet is mounted for travel on a roller of a roller conveyor 2. Two ultrasonic probes 9 each having a coupling shoe 6 are carried an adjustable arms 4. A marking device 5 is shown in a lifted position.

In Figure 2 the coupling shoe 6 is shown in contact with the billet 1.

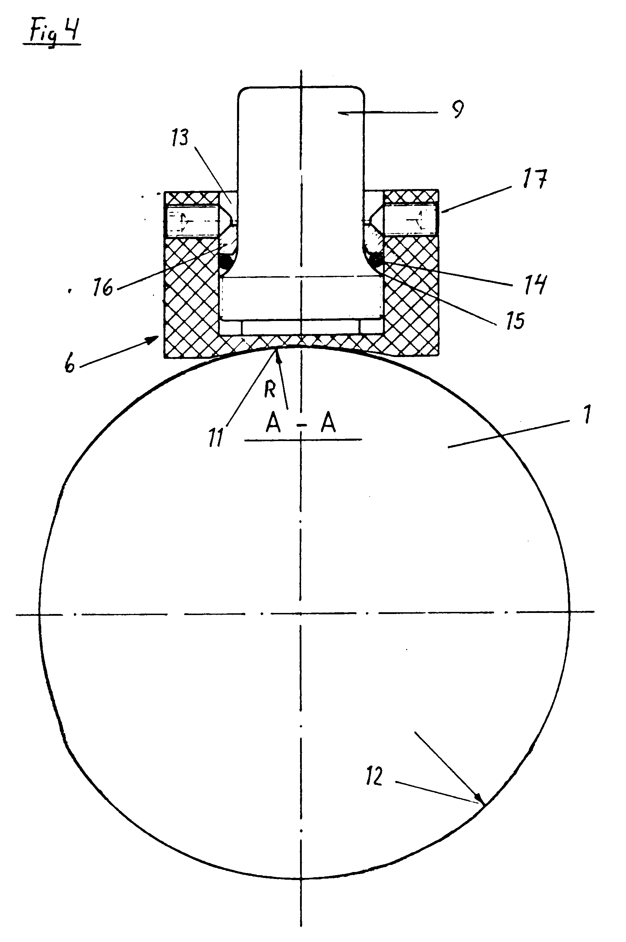

As can be seen in Figure 4, the coupling shoe 6 has a concave contact surface 11 against the billet. A pipe 8 (Fig.2) is connected to a bore in the coupling shoe which runs from the upper side of the coupling shoe and down to the concave contact surface 11. The pipe 8 is further connected to a pump (not shown) for supplying a fluid, preferably water, to the concave surface 11.

The fluid simultaneously both lubricates and provides a better contact between the billet and the coupling shoe. The radius of curvature R for the concave contact surface may be larger, as shown in Figure 4, or smaller than the radius of curvature for the billet 12.

Tests have proved that the radius of curvature R for the concave contact surface may be essentially larger than the radius of curvature for the billet, without increasing the wear of the coupling shoe or influencing the test results. Thus, an important advantage with the present invention is that the coupling shoe can be used in connection with testing of billets having different diameters.

The ultrasonic probe 9 is mounted in a vertical blind bore 13 in the coupling shoe 6. To be able to provide sufficient contact between the probe 9 and the coupling shoe 6, the probe 9 is submerged in a fluid, for example some kind of oil.

A sealing ring or O-ring 14 is provided around the probe 9 and keeps the oil from leaking out of the bore by being pressed down between the wall of the bore and a radially declining projection on the probe by means of a locking ring 16.

The locking ring 16 may be in the form of a ring nut with outer threads, or it may be securely held in place by means of unbraco screws 17 with conical ends as shown in Figure 4. This sealing arrangement also keeps the probe in position in the bore 13.

The arms 4 are movable and adjustable to fit with billets having different diameters, and are provided with exchangeable coupling shoes which are rotatably jointed to the outer ends of the arms, making it possible to adjust the coupling shoes in relation to the billets.

The coupling shoes are made of plexiglass which is easy to work and has a low coefficient of friction.

On the portal like superstructure carrying the arms with the coupling shoes, a marking device 5 is mounted between the arms, coplanar to these arms, for the marking of defects on the billets. The marking device receives impulses from the ultrasonic device simultaneously as defects in the test object or billet is detected. This will provide a correct defect marking of the billets, and the marking lasts as long as defects are detected. It is important that the length of the defect in this way is marked; thereby the amount of wrecked goods is reduced to a minimum.

In a preferred embodiment of the invention for marking defects on the billets, an arrangement is provided which consists of a paint mist pistol mounted between the arms of the coupling shoe and driven by means of compressed air, which is started and stopped by means of signals generated in the ultrasonic device and by which paint is sprayed on the billet when defects are to be marked.

A short description of how the equipment functions will now be given:
1. The haudraulic device is started.
2. The arms are adjusted to fit with the actual billet diameter.
3. The ultrasonic equipment and control unit for the defect marking equipment is switched on, and the necessary adjustment of the apparatus is accomplished.
4. The valves controlling the water and air supply are opened.
5. The conveyor is started.
6. Arriving billets operate limit switches mounted on the roller conveyor, and the coupling shoe with the probe moves onto the billets surface.
7. The whole billet passes under the two coupling shoes and any detected defects are revealed on the screen unit.
8. A pre set limit value defines when the marking equipment should be activated.
9. When in doubt, the roller conveyor may be stopped and manual ultrasonic testing carried out. Such manual testing may be done by means of a separate coupling shoe being guided over the billet's surface.
10. After the billet has passed, the limit switches are released and the coupling shoes are returned to their initial position. Simultaneously the water supply is closed.

Known types of equipment operate with the billets submerged in water, and have a much lower capacity. The present invention, however, is different in that water is supplied between the coupling shoe and the billet and that the probe is disposed in a blind bore in the coupling shoe being surrounded by only a thin film of water.

The capacity of the equipment according to the invention assumably may be of about 1 000 000 tons of aluminium yearly.

## Claims

1. Ultrasonic flaw testing equipment for continuous automatic flaw testing of cost metal billets having one or more ultrasonic probes, a coupling shoe for the or each probe, the coupling shoe(s) being exchangeable, and means for supplying a fluid, preferably water, between the shoe(s) and a metal billet characterised in that the or each ultrasonic probe (9) is disposed in a blind bore or recess (13) in the associated coupling shoe (6) from which it is separable and in that the lower part or the probe (9) is submerged in a liquid.

2. Ultrasonic flaw testing equipment according to claim 1, characterised in that the probe (9) is fixedly held in position in the bore (13) by means of a locking ring (16) which presses a sealing ring or packing (14) between the side of the bore (13) and a radially declining projection on the probe (9).

3. Ultrasonic flaw testing equipment according to claim 2, characterised in that the locking ring (16) is in the form of a ring nut with external threads which can be screwed in corresponding threads in the bore (13).

4. Ultrasonic flaw testing equipment according to claim 2, characterised in that the locking ring (16) is fixedly held in the bore (13) by means of screws (17) having conical ends, which screws are disposed in radial bores in the coupling shoe (6) and protrude into the bore (13).

5. Ultrasonic flaw testing equipment according to any preceding claim characterised in that the contact surface (11) for the coupling shoe (6) against the billets is concave.

6. Ultrasonic flaw testing equipment as claimed in claim 5, characterised in that the radius of curvature of the concave surface of the shoe (6) is larger than the radius of curvature of the normal billet with which it is intended to be used.

7. Ultrasonic flaw testing equipment as claimed in claim 5, characterised in that the radius of curvature of the concave surface of the shoe (6) is smaller than the radius of curvature of the normal billet with which it is intended to be used.

8. Ultrasonic flaw testing equipment as claimed in any preceding claim characterised in that a marking unit is provided to mark the surface or the billets at a position where defects are detected by the probe(s) (9).

## Patentansprüche

1. Ultraschallfehlerprüfvorrichtung zur kontinuierlichen automatischen Überprüfung von gegossenen Metallrundbarren, die eine oder mehrere Ultraschallsonden hat, eine Kupplungsgleitplatte für die oder jede Sonde, wobei die Kupplungsgleitplatte(n) austauschbar sind, und ein Mittel zum Liefern einer Flüssigkeit, vorzugsweise Wasser, zwischen die Gleitplatte(n) und einem Metallrundbarren, dadurch gekennzeichnet, dass die oder jede Ultraschallsonde (9) in einer Grundbohrung oder Aussparung (13) in der zugeordneten Kupplungsgleitplatte (6) angeordnet ist, von der sie getrennt werden kann, und dass der untere Teil der Sonde (9) in eine Flüssigkeit eingetaucht ist.

2. Ultraschallfehlerprüfvorrichtung nach Anspruch 1, dadurch gekennzeichnet, dass die Sonde (9) mittels eines Klemmringes (16) fest in Stellung in der Bohrung (13) gehalten wird, wobei der Klemmring einen Dichtring oder ein Futter (14) zwischen die Seite der Bohrung (13) und einem sich radial verkleinernden Vorsprung auf der Sonde (9) drückt.

3. Ultraschallfehlerprüfvorrichtung nach Anspruch 2, dadurch gekennzeichnet, dass der Klemmring (16) in der Gestalt einer Ringmutter mit Aussengewinde ist, die in ein entsprechendes Gewinde in der Bohrung (13) eingeschraubt werden kann.

4. Ultraschallfehlerprüfvorrichtung nach Anspruch 2, dadurch gekennzeichnet, dass der Klemmring (16) fest in der Bohrung (13) mittels Schrauben (17), die konische Enden haben, gehalten wird, wobei die Schrauben in Radialbohrungen in der Kupplungsgleitplatte (6) angeordnet sind und in die Bohrung (13) ragen.

5. Ultraschallfehlerprüfvorrichtung nach einem der vorhergehenden Ansprüche, dadurch gekennzeichnet, dass die Kontaktoberfläche (11) für die Kupplungsgleitplatte (6) gegen die Rundbarren konkav ist.

6. Wie in Anspruch 5 beanspruchte Ultraschallfehlerprüfvorrichtung, dadurch gekennzeichnet, dass der Krümmungsradius der konkaven Oberfläche der Gleitplatte (6) grösser als der Krümmungsradius des normalen Rundbarrens, mit dem sie benutzt werden soll, ist.

7. Wie in Anspruch 5 beanspruchte Ultraschallfehlerprüfvorrichtung, dadurch gekennzeichnet, dass der Krümmungsradius der konkaven Oberfläche der Gleitplatte (6) kleiner als der Krümmungsradius des normalen Rundbarrens, mit dem sie benutzt werden soll, ist.

8. Wie in einem der vorhergehenden Ansprüche beanspruchte Ultraschallfehlerprüfvorrichtung, dadurch gekennzeichnet, dass eine Markierungseinheit vorgesehen ist, um die Oberfläche oder die Rundbarren an einer Stelle zu markieren, an der Fehlstellen von der (den) Sonden (9) aufgefunden werden.

## Revendications

1. Equipement de contrôle ultrasonique de défauts pour l'épreuve automatique en continu de moulages de billettes métalliques comportant une ou plusieurs sondes ultrasoniques, une semelle d'accouplement de sonde(s), la/les semelle(s) d'accouplement étant interchangeables, et un moyen d'apport de fluide, préférablement de l'eau, entre la/les semelle(s) et la billette métallique, caractérisé en ce que la/les sonde(s) ultrasoniques (9) sont chacune prévues en trou borgne ou congé (13) dans la semelle associée d'accouplement (6) dont elles sont séparables et en ce que la partie inférieure ou la sonde est immergée dans un liquide.

2. Equipement de contrôle ultrasonique de défauts selon la revendication 1, caractérisé en ce que la/les sonde(s) ultrasoniques (9) sont retenues fixes dans l'alésage (13) par l'intermédiaire d'une bague de blocage (16) appuyant un joint ou une garniture d'étanchéité (14) entre le côté de l'alésage (13) et une projection radiale inclinée sur la sonde (9).

3. Equipement de contrôle ultrasonique de défauts selon la revendication 2, caractérisé en ce que la bague de blocage (16) est sous forme d'un écrou annulaire à filetages extérieurs lui permettant d'être vissée dans les filetages correspondants de l'alésage (13).

4. Equipement de contrôle ultrasonique de défauts selon la revendication 2, caractérisé en ce que la bague de blocage (16) est retenue fixe dans l'alésage (13) par l'intermédiaire de vis (17) à extrémité conique, lesdites vis étant disposées dans des alésage de forme radiale dans la semelle d'accouplement et en saillie dans l'alésage (13).

5. Equipement de contrôle ultrasonique de défauts selon l'une ou l'autre des revendications, caractérisé en ce que la surface de contact (11) de la semelle d'accouplement (6) contre les billettes est concave.

6. Equipement de contrôle ultrasonique de défauts selon la revendication 5, caractérisé en ce que le rayon de la courbe de la surface concave de semelle (6) est supérieur au rayon de la courbe de billette normale pour laquelle elle est prévue.

7. Equipement de contrôle ultrasonique de défauts selon la revendication 5, caractérisé en ce que le rayon de la courbe de la surface concave de semelle (6) est inférieur au rayon de la courbe de billette normale pour laquelle elle est prévue.

8. Equipement de contrôle ultrasonique de défauts selon l'une ou l'autre des revendications précédentes, caractérisé en ce qu'un dispositif de repérage est prévu pour marquer la surface ou les billettes à la position dans laquelle des défauts ont été relevés par la/les sonde(s) (9).
